# EUROPEAN PATENT APPLICATION

(11) **EP 3 597 399 A1**
(43) Date of publication of application: **22.01.2020**
(21) Application number: 18184782.3
(22) Date of filing: 20.07.2018
(51) Int. Cl.: B29C 64/153, B33Y 10/00, B29C 64/393, B33Y 50/02, B22F 3/105

(54) **METHOD FOR ADDITIVELY MANUFACTURING AT LEAST ONE THREE-DIMENSIONAL OBJECT**

(71) Applicant: Concept Laser GmbH, 96215 Lichtenfels (DE)
(72) Inventor: Werner, Jürgen, 96215 Lichtenfels (DE)
(74) Representative: Hafner & Kohl Patent- und Rechtsanwälte Partnerschaft mbB

(57) **Abstract**

Method for additively manufacturing at least one three-dimensional object (2) by means of successive layerwise selective irradiation and consolidation of build material layers (3), whereby each build material layer (3) comprises at least one irradiation area (IA) which is to be irradiated and consolidated by means of at least one energy beam (5), whereby the at least one irradiation area (IA) is irradiated on basis of a main irradiation pattern (MP) for consolidating the irradiation area (IA), the main irradiation pattern (MP) comprising a plurality of irradiation pattern elements (IPE) being separately irradiatable or irradiated with the at least one energy beam (5), wherein for at least one irradiation area (IA) of at least one build material layer (3), at least one irradiation pattern element (IPE) is at least partially, particularly completely, irradiated in a main irradiation step and in at least one additional irradiation step, whereby the amount of energy input into the respective irradiation pattern element (IPE) in the main irradiation step is different from the amount of energy input into the irradiation pattern element (IPE) in the at least one additional irradiation step.

## Description

The invention relates to a method for additively manufacturing at least one three-dimensional object by means of successive layerwise selective irradiation and consolidation of build material layers, whereby each build material layer comprises at least one irradiation area which is to be irradiated and consolidated by means of at least one energy beam, whereby the at least one irradiation area is irradiated on basis of a main irradiation pattern for consolidating the irradiation area, the main irradiation pattern comprising a plurality of irradiation pattern elements being separately irradiatable or irradiated with the at least one energy beam.

Respective methods for additively manufacturing at least one three-dimensional object, which may be implemented as selective electron beam melting processes or selective laser melting processes, for instance, are known from the technical field of additive manufacturing.

It is known that the amount of energy input into respective irradiation areas and particularly, the distribution of energy input into respective irradiation areas is related with certain structural properties, i.e. particularly mechanical properties, of the three-dimensional object which is to be additively manufactured.

The control of the amount of energy input into respective irradiation areas is thus, an important factor for obtaining three-dimensional objects of desired structural properties. This applies particularly, to the selective irradiation and consolidation of build material layers of build materials which have a certain tendency of crack formation when being irradiated and consolidated.

In this regard, diverse irradiation approaches or irradiation strategies, respectively have been suggested. Yet, there exists an ongoing need for further developing of methods for additively manufacturing three-dimensional objects with respect to the structural properties of the three-dimensional objects manufacturable with respective methods.

It is the object of the invention to provide a method for additively manufacturing at least one three-dimensional object allowing for improved structural properties of the at least one three-dimensional object manufacturable with the method.

This object is achieved by a method for additively manufacturing at least one three-dimensional object according to the independent Claims. The claims depending on the independent Claims relate to possible embodiments of the method according to the independent Claims.

The method described herein is a method for additively manufacturing at least one three-dimensional object ("object") by means of successive layerwise selective irradiation and consolidation of build material layers, i.e. layers of a build material which can be consolidated by means of being irradiated with an energy beam. The build material may be provided as a powder, for instance. The build material may be or comprise a ceramic, a polymer, or a metal, for instance. The energy beam may be an electron beam or a laser beam, for instance. The build material layers which are to be selectively irradiated and consolidated are successively applied in a build plane of an apparatus for additively manufacturing at least one three-dimensional object which is used for performing the method. The method may be implemented as a selective laser sintering method, a selective laser melting method, or a selective electron beam melting method, for instance. Yet, it is also conceivable that the method is a binder jetting method, particularly a metal binder jetting method, for instance.

The method is performable or performed by an apparatus for additively manufacturing at least one three-dimensional object. The apparatus for performing the method may be embodied as a selective laser sintering apparatus, a selective laser melting apparatus, or a selective electron beam melting apparatus, for instance. Yet, it is also conceivable that the apparatus for performing the method is embodied as a binder jetting apparatus, particularly a metal binder jetting apparatus, for instance.

According to the method, each build material layer comprises at least one irradiation area which is to be irradiated and consolidated by means of at least one energy beam. A respective irradiation area typically, corresponds to the or a cross-section of the object, which is to be additively manufactured, in the respective build material layer. A respective irradiation area is irradiated on basis of a main irradiation pattern for consolidating the irradiation area. The main irradiation pattern thus, serves for inputting enough energy into the build material so as to achieve a desired consolidation of the build material. The main irradiation pattern is typically the same for each irradiation area. Yet, irradiating different irradiation areas on basis of different main irradiation patterns is also conceivable.

A respective main irradiation pattern comprises a plurality of irradiation pattern elements distributed across a respective irradiation area. The irradiation pattern elements are arranged in a specific arrangement relative to each other. The arrangement of the irradiation pattern elements is typically a regular arrangement such as a checkerboard arrangement, for instance. Yet, irregular arrangements of irradiation pattern elements are also conceivable.

Each irradiation pattern element has a specific shape, dimensions and orientation. Hence, each irradiation pattern element defines a specific sub-area of the respective irradiation area in accordance with the specific shape, dimensions, and orientation of the respective irradiation pattern element. Merely as an example, a respective irradiation pattern element may have the shape of a rectangle, particularly the shape of a square. Typically, all irradiation pattern elements of a respective irradiation area have the same basic shape, dimensions, and orientation. Yet, irradiation pattern elements of a specific irradiation area having different basic shapes and/or dimensions and/or orientation are conceivable as well.

Respective irradiation pattern elements are separately irradiatable or irradiated with the at least one energy beam. Hence, each irradiation pattern element may be separately irradiated with the at least one energy beam, whereby the at least one energy beam is guided across the respective irradiation pattern element in a certain path. Typically, the area of a respective irradiation pattern element is covered or filled with irradiation vectors, e.g. scan vectors, according to which the energy beam is guided across the respective irradiation pattern element when the respective irradiation pattern element is irradiated with the at least one energy beam.

The irradiation pattern elements of a respective irradiation area are irradiated and consolidated according to a specific order or sequence, respectively. The order or sequence of irradiating the respective irradiation pattern elements of a specific irradiation area may also comprise simultaneously irradiating a plurality of different irradiation pattern elements. The order or sequence of irradiating the respective irradiation pattern elements may be defined by irradiation control data, for instance.

According to the method, for at least one irradiation area of at least one build material layer, at least one irradiation pattern element is at least partially, particularly completely, irradiated in a main irradiation step and in at least one additional or auxiliary irradiation step, whereby the amount of energy input into the respective irradiation pattern element in the main irradiation step is different from the amount of energy input into the irradiation pattern element in the at least one additional or auxiliary irradiation step. Hence, a respective irradiation pattern element is irradiated in at least two different irradiation steps, i.e. in the main irradiation step and in the at least one additional irradiation step, whereby the energy input into the respective irradiation pattern element in the respective irradiation steps is different. In other words, a respective irradiation pattern element is irradiated a first time and at least one second time, whereby the amount of energy input into the respective irradiation pattern element when being irradiated the first time is different, i.e. higher or lower, from the amount of energy input into the respective irradiation pattern element when being irradiated the second time. The amount of energy input into respective irradiation pattern elements when being irradiated the first time and the at least one second time may be separately controlled for each irradiation pattern element being irradiated in the main irradiation step and in the at least one additional irradiation step.

By irradiating the respective irradiation pattern element a first time and at least one second time and thus, by inputting at least two different amounts of energy into the respective irradiation pattern element, the consolidation behavior of the respective irradiation pattern element, i.e. the consolidation behavior of the build material of the respective irradiation pattern element, may be concertedly influenced and controlled which also allows for concertedly influencing and controlling the structural properties of the object which is to be additively manufactured. Crack formation can also be reduced in a respective manner. Hence, irradiating the respective irradiation pattern element at least a first and a second time and thus, inputting at least two different amounts of energy into the respective irradiation pattern element, allows for improving the structural properties of the object which is to be additively manufactured. The structural properties particularly, refer to the mechanical properties, e.g. density, strength, stability, etc. of the object which is to be additively manufactured.

Typically, all irradiation pattern elements of a respective irradiation area are irradiated in a respective main irradiation step and in at least one respective additional irradiation step. In other words, each irradiation pattern element of a respective irradiation area is typically separately irradiated a first time and at least one second time so that the total sum of energy input into each irradiation pattern element may be individually controlled for each irradiation pattern element. The total sum of energy input into each irradiation pattern element results from the sum of the amount of energy input into the respective irradiation pattern element when being irradiated in the main irradiation step and the amount of energy input into the respective irradiation pattern element when being irradiated in the at least one additional irradiation step and/or the total sum of energy input into each irradiation pattern element results from the sum of the amount of energy input into the respective irradiation pattern element when being irradiated the first time and the amount of energy input into the respective irradiation pattern element when being irradiated the at least one second time.

The amount of energy input into the respective irradiation pattern elements in the at least one additional irradiation step is typically smaller than the amount of energy input into the respective irradiation pattern element in the main irradiation step. In other words, the amount of energy input into a respective irradiation pattern element in the main irradiation step is typically bigger than the amount of energy input into the respective irradiation pattern element in the at least one additional irradiation step.

Thereby, the amount of energy input into a respective irradiation pattern element in the or a respective additional irradiation step is typically not high enough so as to allow for a consolidation of build material. With regard to an implementation of the method as a selective electron beam melting process or a selective laser melting process, the amount of energy input into a respective irradiation pattern element in the or a respective additional irradiation step is typically not high enough so as to allow for a melting of build material. Hence, the amount of energy input into the respective irradiation pattern element in the at least one additional irradiation step does typically not result in a consolidation of the build material, whereas the amount of energy input into the respective irradiation pattern element in the main irradiation step does typically result in a consolidation of the build material. With regard to an implementation of the method as a selective electron beam melting process or a selective laser melting process, the amount of energy input the amount of energy input into the respective irradiation pattern element in the at least one additional irradiation step typically does not result in a melting of the build material, whereas the amount of energy input the amount of energy input into the respective irradiation pattern element in the main irradiation step typically does result in a melting of the build material.

The additional irradiation step may be deemed or denoted as a pre-heating step or a post-heating step of the respective irradiation pattern element depending on the order of performing the main irradiation step and the irradiation step. A pre-heating step is given when the additional irradiation step is performed before the main irradiation step and typically serves for uniformly heating the build material up to a build material specific consolidation temperature. A post-heating step is given when the additional irradiation step is performed after the main irradiation step and typically serves for uniformly cooling the build material down from the build material specific consolidation temperature. A respective irradiation pattern element may thus, undergo a pre-heating step before the consolidation of the build material in the respective irradiation pattern element and/or a post-heating step after consolidation of the build material in the respective irradiation pattern element. Different additional irradiation steps, e.g. different pre-heating steps and/or different post-heating steps, may be performed at the same time or at different times within an irradiation area so that it is possible that at least one first irradiation pattern element of an irradiation area undergoes a pre-heating step, whereas at least one further irradiation pattern element of the irradiation area undergoes a post-heating step at the same time or at different times.

The successive layerwise selective irradiation and consolidation of respective irradiation pattern elements and irradiation areas, respectively is typically performed on basis of at least one irradiation parameter set, particularly a plurality of different irradiation parameter sets. Hence, at least one irradiation parameter set, particularly a plurality of irradiation parameter sets, is used for irradiating and consolidating the irradiation pattern elements and irradiation areas, respectively. A respective irradiation parameter set comprises at least one irradiation parameter. An irradiation parameter may be a or comprise at least one energy beam parameter of the energy beam used for irradiating respective irradiation areas. A respective energy beam parameter may be or comprise at least one of: the intensity or power of the energy beam, the intensity profile of the energy beam, the (cross-sectional) shape of the energy beam, the focal size or spot size of the energy beam, the focal position or spot position of the energy beam, the energy beam path according to which the energy beam is moved across an irradiation area, the speed with which the energy beam is moved along a respective energy beam path across an irradiation area, the geometrical relationship between respective energy beam paths, particularly the relative orientation of respective energy beam paths, the distance between respective energy beam paths, the degree of overlap of respective energy beam paths, etc. Other energy beam parameters are conceivable.

Each irradiation parameter set results typically in a specific amount of energy input into an irradiation pattern element of a respective irradiation area of a respective build material layer. In other words, the combination of respective irradiation parameters or energy beam parameters, respectively of a specific irradiation parameter set is correlated with specific amount of energy input into an irradiation pattern element of a respective irradiation area of a respective build material layer. At least in a respective main irradiation step, the amount of energy input into a irradiation pattern element of a respective irradiation area of a respective build material layer results in a bond and consolidation, respectively of the irradiation pattern element and the irradiation area of the respective build material layer and also in a bond and connection, respectively of the irradiation pattern element of the irradiation area of the respective build material layer with at least one other irradiation pattern element of the irradiation area and with at least one previously selectively irradiated and consolidated build material layer.

According to an exemplary embodiment of the method, a first irradiation parameter set may be used for irradiating the irradiation pattern element in the main irradiation step and at least one further irradiation parameter set may be used for irradiating the irradiation pattern element in the at least one additional irradiation step. The first irradiation parameter set typically allows for a/the first amount of energy input into the respective irradiation pattern element. The at least one further irradiation parameter set typically allows for a second amount of energy input into the respective irradiation pattern element, i.e. particularly a smaller amount of energy input into the respective irradiation pattern element. Hence, specific irradiation parameter sets may be assigned to the main irradiation step and the at least one additional irradiation step.

According to another exemplary embodiment of the method, it is also possible that the amount of energy input into a respective irradiation pattern element in the at least one additional irradiation step does (also) result in a consolidation of the build material, whereby the build material is consolidated with a first degree of consolidation (first consolidation degree), whereas the amount of energy input into the respective irradiation pattern element in the main irradiation step does result in a consolidation of the build material, whereby the build material is consolidated with a second degree of consolidation (second consolidation degree). With regard to an implementation of the method as a selective electron beam melting process or a selective laser melting process, the amount of energy input the amount of energy input into the respective irradiation pattern element in the at least one additional irradiation step may result in a first melting degree, whereas the amount of energy input into the respective irradiation pattern element in the main irradiation step does may result in a second melting degree. Respective consolidation degrees and melting degrees, respectively may result in different structural properties, i.e. particularly in different densities, of the object which is to be additively manufactured. Hence, a first consolidation degree or melting degree, respectively, may be related with a first density of the object and a second consolidation degree or melting degree, respectively may be related with a second density of the object. The consolidation degree or melting degree, respectively of the main irradiation step is typically related with a higher density of the object.

With regard to the irradiation of a specific irradiation pattern element in at least one additional irradiation step, the same area or a different area may be irradiated compared with the main irradiation step of the same irradiation pattern element. In other words, with respect to the irradiation of a specific irradiation pattern element, the area which is irradiated in the additional irradiation step may be equal to or larger or smaller than the area which is irradiated in the main irradiation step. When the area which is irradiated in the additional irradiation step is larger than the area which is irradiated in the main irradiation step, the area which is irradiated in the additional irradiation step typically entirely overlaps the area of the respective irradiation pattern element. By adjusting the area for irradiating a respective irradiation pattern element in the main irradiation step and in the at least one additional irradiation step, the energy input in the respective irradiation pattern element in the main irradiation step and in the at least one additional irradiation step may be controlled which is also a measure for concertedly influencing and/or controlling the structural properties of the object which is to be additively manufactured.

The at least one additional irradiation step may be performed on basis of an additional or auxiliary irradiation pattern, i.e. an irradiation pattern additional or auxiliary to the main irradiation pattern. The additional or auxiliary irradiation pattern comprises at least one additional or auxiliary irradiation pattern element, particularly a plurality of additional or auxiliary irradiation pattern elements. A respective additional or auxiliary irradiation pattern element is typically, defined by the area which is irradiated in a respective additional irradiation step.

A respective additional or auxiliary irradiation pattern element of the additional or auxiliary irradiation pattern may have the same basic shape and/or dimensions and/or orientation as a respective irradiation pattern element of the main irradiation pattern. Yet, it is also conceivable that a respective additional or auxiliary irradiation pattern element of the additional or auxiliary irradiation pattern may have a different basic shape and/or different dimensions and/or different orientation as a respective irradiation pattern element of the main irradiation pattern. Also, for a specific irradiation area, the number of additional or auxiliary irradiation pattern elements of the additional or auxiliary irradiation pattern may equal the number of irradiation pattern elements of the main irradiation pattern. Yet, it is also conceivable that, for a specific irradiation area, the number of additional or auxiliary irradiation pattern elements of the additional or auxiliary irradiation pattern may differ from the number of irradiation pattern elements of the main irradiation pattern. By choosing the basic shape and/or dimensions and/or the orientation and/or the number of respective additional or auxiliary irradiation pattern elements, the consolidation behavior of corresponding irradiation pattern elements may be concertedly influenced and controlled which also allows for concertedly influencing and controlling the structural properties of the object which is to be additively manufactured.

According to another exemplary embodiment of the method, it is possible that the irradiation pattern elements of at least one irradiation area of at least one build material layer may be categorized in at least two categories, particularly categories relating to the specific structural properties of the object which is to be additively manufactured. Thereby, irradiation pattern elements being categorized in a specific category, e.g. a first category, are only irradiated in the main irradiation step and irradiation pattern element being categorized in another specific category, e.g. a second category, are also irradiated in the at least one additional irradiation step. Hence, an efficient way of concertedly influencing and/or controlling the structural properties is given since only irradiation pattern elements of a category which effectively requires influencing and/or controlling the structural properties of the object which is to be additively manufactured are in fact irradiated on basis of the main irradiation step and the at least one additional irradiation step. The categories may be implemented by a suitable hardware- and/or software-embodied categorization unit which takes into account diverse parameters of the object which is to be additively manufactured. The categorization unit may particularly, determine specific portions and/or regions of the object which is to be additively manufactured requires special structural properties, e.g. portions and/or regions under special, e.g. mechanical and/or thermal, loads, so that the irradiation pattern elements which are arranged in respective portions and/or regions of the object which require special structural properties may undergo an irradiation with the main irradiation step and the at least one additional irradiation step. A respective determination of specific portions and/or regions of the object which is to be additively manufactured may be based on user-inputs, modelings, simulations, etc.

The invention further relates to a hardware- and/or software-embodied control unit for an apparatus for additively manufacturing at least one three-dimensional object by means of successive layerwise selective irradiation and consolidation of build material layers, whereby each build material layer comprises at least one irradiation area which is to be irradiated and consolidated by means of at least one energy beam, whereby the at least one irradiation area is irradiated on basis of a main irradiation pattern for consolidating the irradiation area, the main irradiation pattern comprising a plurality of irradiation pattern elements being separately irradiatable or irradiated with the at least one energy beam. The control unit is configured to control the successive layerwise selective irradiation and consolidation of respective irradiation areas in accordance with the method described herein.

Thus, the control unit is particularly, configured to control, for at least one irradiation area of at least one build material layer, at least one irradiation pattern element is at least partially, particularly completely, irradiated in a main irradiation step and in at least one additional irradiation step, whereby the amount of energy input into the respective irradiation pattern element in the main irradiation step is different from the amount of energy input into the irradiation pattern element in the at least one additional irradiation step.

The invention further relates to an apparatus for additively manufacturing at least one three-dimensional object by means of successive layerwise selective irradiation and consolidation of build material layers, whereby each build material layer comprises at least one irradiation area which is to be irradiated and consolidated by means of at least one energy beam. The apparatus comprises or is connected with a control unit as described herein.

The apparatus can be embodied as a selective laser sintering apparatus, a selective laser melting apparatus, or a selective electron beam melting apparatus, for instance. Yet, it is also conceivable that the apparatus is embodied as a binder jetting apparatus, particularly a metal binder jetting apparatus, for instance.

The apparatus comprises a number of functional and/or structural units which are operable or operated during its operation. Each functional and/or structural unit may comprise a number of functional and/or structural sub-units. Exemplary functional and/or structural units are a build material application unit which is configured to apply an amount of build material which is to be selectively irradiated and consolidated in the build plane of the apparatus so as to form a build material layer in the build plane, an irradiation unit which is configured to selectively irradiate and thereby, consolidate build material layers with at least one energy beam, and a respective control unit.

All annotations regarding the method also apply to the control unit and/or the apparatus.

Exemplary embodiments of the invention are described with reference to the Fig., whereby:
- Fig. 1: shows a principle drawing of an apparatus for additively manufacturing of three-dimensional objects according to an exemplary embodiment in a side-view; and
- Fig. 2 - 8: each show a principle drawing of a build material layer which is to be selectively irradiated and consolidated in accordance with a method according to an exemplary embodiment in a top-view.

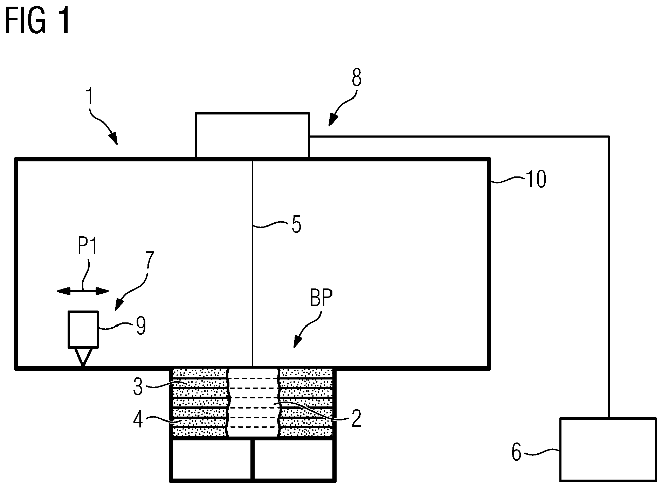

Fig. 1 shows a principle drawing of an exemplary embodiment of an apparatus 1 for additively manufacturing three-dimensional objects 2, e.g. technical components, by means of successive layerwise selective irradiation and accompanying consolidation of build material layers 3 of a powdered build material 4, e.g. a metal powder, which can be consolidated by means of at least one energy beam 5 according to an exemplary embodiment. The energy beam 5 may be an electron beam or a laser beam, for instance. The apparatus 1 may be embodied as a selective electron beam melting apparatus or as a selective laser melting apparatus, for instance.

The apparatus 1 comprises a number of functional and/or structural units which are operable and operated during its operation. Each functional and/or structural unit may comprise a number of functional and/or structural sub-units. Operation of the functional and/or structural units and the apparatus 1, respectively is controlled by a hard- and/or software embodied (central) control unit 6.

Exemplary functional and/or structural units of the apparatus 1 are a build material application unit 7, an irradiation unit 8, and the control unit 6.

The build material application unit 7 is configured to apply an amount of build material 4 in the build plane BP of the apparatus 1 so as to generate respective build material layers 3 which are to be selectively irradiated and consolidated during additively manufacturing a three-dimensional object 2. The build material application unit 7 may comprise a build material application element 9 which may be embodied as a blade-like re-coating element, for instance. The build material application element 9 is moveably supported within the process chamber 10 of the apparatus 1; the build material application element 9 may be moved across the build plane BP so as to apply an amount of dosed build material 4 in the build plane BP and so as to generate a respective build material layer 3 which is to be selectively irradiated and consolidated during additively manufacturing a three-dimensional object 2. An exemplary motion of the build material application element 9 across the build plane BP is indicated by double-arrow P1. A drive unit (not shown) may be assigned to the build material application unit 7 so as to generate a drive force for moving the build material application element 9 across the build plane BP.

The irradiation unit 8 is configured to selectively irradiate and thereby, consolidate respective build material layers 3 which have been applied in the build plane BP of the apparatus 1 by means of the build material application unit 7 with at least one energy beam 5. The irradiation unit 8 may comprise a beam generating unit (not shown) configured to generate the at least one energy beam 5 and a beam deflecting unit (not shown), e.g. a scanning unit, configured to deflect the at least one energy beam 5 to diverse positions within the build plane BP.

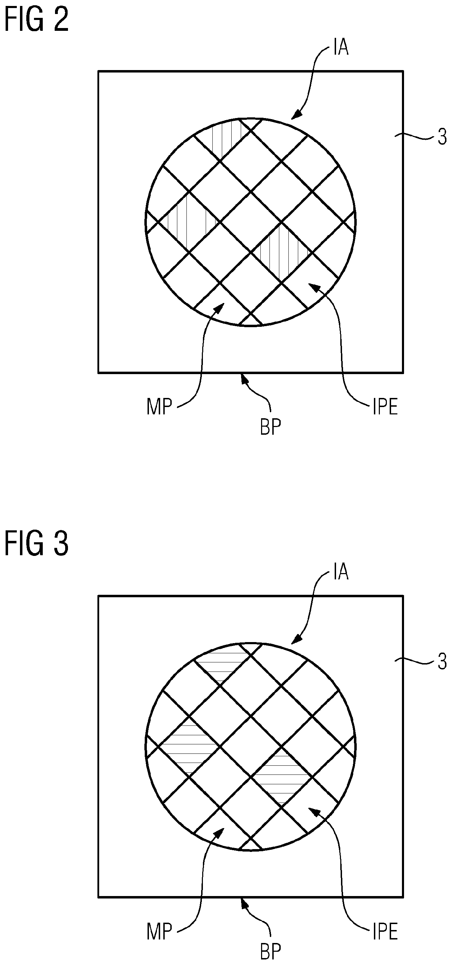

The control unit 6 is configured to implement a method for additively manufacturing a three-dimensional object 2 according to exemplary embodiments which will be explained in more detail in context with Fig. 2 - 8.

According to exemplary embodiments of the method, each build material layer 3 comprises at least one irradiation area IA which is to be irradiated and consolidated by means of the energy beam 5. A respective irradiation IA area corresponds to the or a cross-section of the object 2, which is to be additively manufactured, in the respective build material layer 3. A respective irradiation area IA is irradiated on basis of a main irradiation pattern MP for consolidating the irradiation area IA. The main irradiation pattern MP thus, serves for inputting enough energy into the build material 4 so as to achieve a desired consolidation of the build material 4.

As is apparent from e.g. Fig. 2, the main irradiation pattern MP comprises a plurality of irradiation pattern elements IPE distributed across the respective irradiation area IA. The irradiation pattern elements IPE are arranged in a specific arrangement relative to each other. The arrangement of the irradiation pattern elements IPE is typically a regular arrangement such as a checkerboard arrangement as exemplarily shown in Fig. 2 - 8.

Each irradiation pattern element IPE has a specific shape, dimensions and orientation. Hence, each irradiation pattern element IPE defines a specific sub-area of the irradiation area IA. As is apparent from Fig. 2, a respective irradiation pattern element IPE may have the shape of a rectangle, particularly the shape of a square, for instance. Rectangular irradiation pattern element IPE may be denoted as "islands".

Respective irradiation pattern elements IPE are separately irradiatable or irradiated with the energy beam 5, whereby the energy beam 5 is guided across the respective irradiation pattern element IPE in a certain path. Typically, the area of a respective irradiation pattern element IPE is covered or filled with irradiation vectors (not shown), e.g. scan vectors, according to which the energy beam 5 is guided across the respective irradiation pattern element IPE when the respective irradiation pattern element IPE is irradiated with the energy beam 5.

The irradiation pattern elements IPE of the irradiation area IA are irradiated and consolidated according to a specific order or sequence, respectively. The order or sequence of irradiating the irradiation pattern elements IPE of the irradiation area IA may also comprise simultaneously irradiating a plurality of different irradiation pattern elements IPE. The order or sequence of irradiating the irradiation pattern elements IPE may be defined by irradiation control data of the control unit 6, for instance.

According to the exemplary embodiment of the method, at least one irradiation pattern element IPE, particularly all irradiation pattern elements IPE, are irradiated in a main irradiation step (see e.g. Fig. 3, 5, 7) and in at least one additional or auxiliary irradiation step (see e.g. Fig. 2, 4, 6), whereby the amount of energy input into the respective irradiation pattern element IPE in the main irradiation step is different from the amount of energy input into the irradiation pattern element IPE in the additional or auxiliary irradiation step. Hence, a respective irradiation pattern element IPE is irradiated in at least two different irradiation steps, whereby the energy input into the respective irradiation pattern element IPE in the respective irradiation steps is different. In other words, a respective irradiation pattern element IPE is irradiated a first time and at least one second time, whereby the amount of energy input into the respective irradiation pattern element IPE when being irradiated the first time is different, i.e. higher or lower, from the amount of energy input into the respective irradiation pattern element IPE when being irradiated the second time. The amount of energy input into the respective irradiation pattern element IPE when being irradiated the first time and the at least one second time may be separately controlled for each irradiation pattern element IPE being irradiated in the main irradiation step and in the at least one additional irradiation step.

Fig. 2 shows a first exemplary embodiment of an additional irradiation step. As is apparent from Fig. 2, a plurality of irradiation pattern elements IPE including irradiation pattern elements IPE being disposed in an inner portion of the irradiation area IA as well as irradiation pattern elements IPE being disposed in an outer portion of the irradiation area IA may be irradiated in the additional irradiation step. At least two of the plurality of irradiation pattern elements IPE may be simultaneously irradiated in the additional irradiation step. Fig. 3 shows a corresponding exemplary embodiment of a main irradiation step.

By irradiating respective irradiation pattern elements IPE a first time and at least one second time and thus, by inputting at least two different amounts of energy into the irradiation pattern elements IPE, the consolidation behavior of the irradiation pattern elements IPE, i.e. the consolidation behavior of the build material 3 of the respective irradiation pattern elements IPE, may be concertedly influenced and controlled which also allows for concertedly influencing and controlling the structural properties of the object 2 which is to be additively manufactured. Crack formation can also be reduced in a respective manner. Hence, irradiating the irradiation pattern elements IPE at least a first and a second time and thus, inputting at least two different amounts of energy into the irradiation pattern elements IPE, allows for improving the structural properties of the object 2 which is to be additively manufactured. The structural properties particularly, refer to the mechanical properties, e.g. density, strength, stability, etc. of the object 2 which is to be additively manufactured.

Typically, all irradiation pattern elements IPE of the irradiation area irradiation area IA are irradiated in a respective main irradiation step and in at least one respective additional irradiation step. In other words, each irradiation pattern element IPE of the irradiation area IA is typically separately irradiated a first time and at least one second time so that the total sum of energy input into each irradiation pattern element IPE may be individually controlled for each irradiation pattern element IPE. The total sum of energy input into each irradiation pattern element IPE results from the sum of the amount of energy input into the respective irradiation pattern element IPE when being irradiated in the main irradiation step and the amount of energy input into the respective irradiation pattern element IPE when being irradiated in the at least one additional irradiation step and/or the total sum of energy input into each irradiation pattern element IPE results from the sum of the amount of energy input into the respective irradiation pattern element IPE when being irradiated the first time and the amount of energy input into the respective irradiation pattern element IPE when being irradiated the at least one second time.

The amount of energy input into the respective irradiation pattern elements IPE in the at least one additional irradiation step is typically, smaller than the amount of energy input into the respective irradiation pattern element IPE in the main irradiation step. In other words, the amount of energy input into a respective irradiation pattern element IPE in the main irradiation step is typically bigger than the amount of energy input into the respective irradiation pattern element IPE in the at least one additional irradiation step.

The amount of energy input into a respective irradiation pattern element IPE in the additional irradiation step is typically not high enough so as to allow for a consolidation of build material 4. Hence, the amount of energy input into the respective irradiation pattern element IPE in the at least one additional irradiation step does typically not result in a consolidation of the build material 4, whereas the amount of energy input into the respective irradiation pattern element IPE in the main irradiation step does typically result in a consolidation of the build material 4. Hence, the amount of energy input into a respective irradiation pattern element IPE in the at least one additional irradiation step typically does not result in a melting of the build material 4, whereas the amount of energy input into the respective irradiation pattern element IPE in the main irradiation step typically does result in a melting of the build material 4.

The additional irradiation step may be deemed or denoted as a pre-heating step or a post-heating step of the respective irradiation pattern element IPE depending on the order of performing the main irradiation step and the irradiation step. A pre-heating step is given when the additional irradiation step is performed before the main irradiation step and typically serves for uniformly heating the build material 4 up to a build material specific consolidation or melting temperature. A post-heating step is given when the additional irradiation step is performed after the main irradiation step and typically serves for uniformly cooling the build material 4 down from the build material specific consolidation or melting temperature. A respective irradiation pattern element IPE may thus, undergo a pre-heating step before the consolidation of the build material 4 in the respective irradiation pattern element IPE and/or a post-heating step after consolidation of the build material 4 in the respective irradiation pattern element IPE. Different additional irradiation steps, e.g. different pre-heating steps and/or different post-heating steps, may be performed at the same time or at different times within an irradiation area IA so that it is possible that at least one first irradiation pattern element IPE of the irradiation area IA undergoes a pre-heating step, whereas at least one further irradiation pattern element IPE of the irradiation area IA undergoes a post-heating step at the same time or at different times.

The successive layerwise selective irradiation and consolidation of respective irradiation pattern elements IPE is typically performed on basis of at least one irradiation parameter set, particularly a plurality of different irradiation parameter sets. Each irradiation parameter set results typically in a specific amount of energy input into an irradiation pattern element IPE. In other words, the combination of respective irradiation parameters or energy beam parameters, respectively of a specific irradiation parameter set is correlated with specific amount of energy input into an irradiation pattern element IPE. At least in a main irradiation step, the amount of energy input into an irradiation pattern element IPE results in a bond and consolidation, respectively of the irradiation pattern element IPE and also in a bond and connection, respectively of the irradiation pattern element IPE with at least one other irradiation pattern element IPE of the irradiation area IA and with a previously selectively irradiated and consolidated build material layer 3.

A first irradiation parameter set may be used for irradiating an irradiation pattern element IPE in the main irradiation step and at least one further irradiation parameter set may be used for irradiating the irradiation pattern element IPE in the at least one additional irradiation step. The first irradiation parameter set typically allows for a/the first amount of energy input into the respective irradiation pattern element IPE. The at least one further irradiation parameter set typically allows for a second amount of energy input into the respective irradiation pattern element IPE, i.e. a smaller amount of energy input into the respective irradiation pattern element IPE. Hence, specific irradiation parameter sets may be assigned to the main irradiation step and the at least one additional irradiation step.

Yet, it is also possible that the amount of energy input into a respective irradiation pattern element IPE in the at least one additional irradiation step does (also) result in a consolidation of the build material 4, whereby the build material 4 is consolidated with a first consolidation or melting degree, whereas the amount of energy input into the respective irradiation pattern element IPE in the main irradiation step does result in a consolidation of the build material 4, whereby the build material 4 is consolidated with a second consolidation or melting degree. Respective consolidation degrees and melting degrees, respectively may result in different structural properties, i.e. particularly in different densities, of the object 2 which is to be additively manufactured. Hence, a first consolidation degree or melting degree, respectively, may be related with a first density of the object 2 and a second consolidation degree or melting degree, respectively may be related with a second density of the object 2. The consolidation degree or melting degree, respectively of the main irradiation step is typically related with a higher density of the object 2.

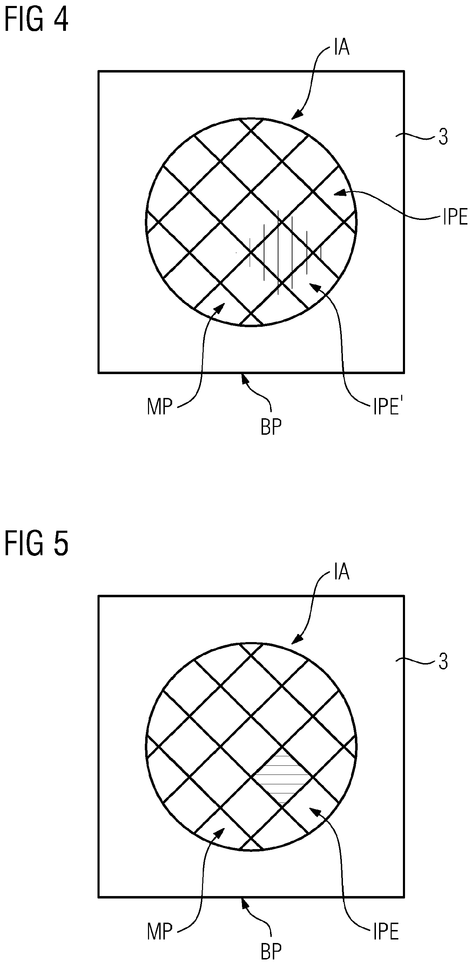

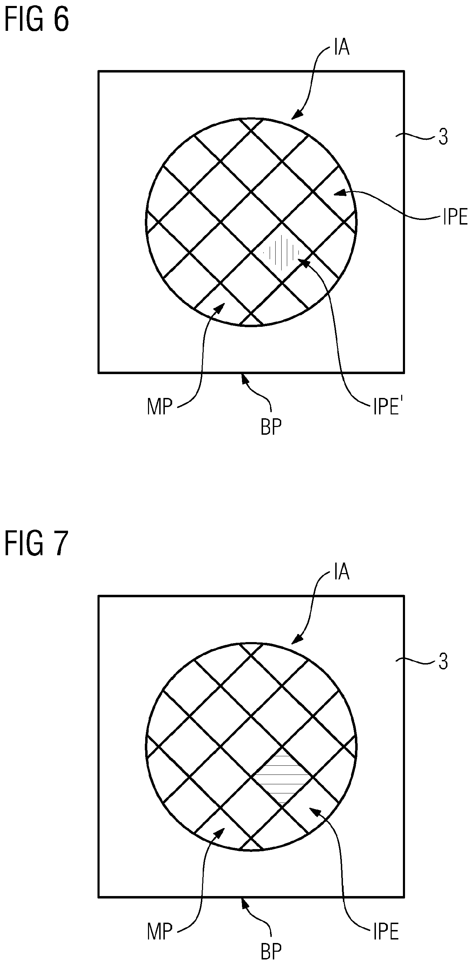

As is apparent from the exemplary embodiments of Fig. 4 - 7, with respect to the irradiation of a specific irradiation pattern element IPE, the area which is irradiated in the additional irradiation step may be larger (see Fig. 4) or smaller (see Fig. 6) than the area which is irradiated in the main irradiation step (see Fig. 5, 7). When the area which is irradiated in the additional irradiation step is larger than the area which is irradiated in the main irradiation step, the area which is irradiated in the additional irradiation step typically entirely overlaps the area of the respective irradiation pattern element (see Fig. 4). By adjusting the area for irradiating a respective irradiation pattern element IPE in the main irradiation step and in the at least one additional irradiation step, the energy input in the respective irradiation pattern element IPE in the main irradiation step and in the at least one additional irradiation step may be controlled which is also a measure for concertedly influencing and/or controlling the structural properties of the object 2 which is to be additively manufactured.

As is particularly apparent from the exemplary embodiments of Fig. 4 - 7, a respective additional irradiation step may be performed on basis of an additional or auxiliary irradiation pattern, i.e. an irradiation pattern additional or auxiliary to the main irradiation pattern. The additional or auxiliary irradiation pattern comprises at least one additional or auxiliary irradiation pattern element IPE', particularly a plurality of additional or auxiliary irradiation pattern elements. A respective additional or auxiliary irradiation pattern element IPE' is defined by the area which is irradiated in a respective additional irradiation step.

A respective additional or auxiliary irradiation pattern element IPE' of the additional or auxiliary irradiation pattern may have the same basic shape and/or dimensions and/or orientation as a respective irradiation pattern element IPE of the main irradiation pattern MP. Yet, it is also conceivable that a respective additional or auxiliary irradiation pattern element IPE' of the additional or auxiliary irradiation pattern may have a different basic shape and/or different dimensions and/or different orientation as a respective irradiation pattern element IPE of the main irradiation pattern MP. Also, the number of additional or auxiliary irradiation pattern elements IPE' of the additional or auxiliary irradiation pattern may equal the number of irradiation pattern elements IPE of the main irradiation pattern MP. Yet, it is also conceivable that, for a specific irradiation area, the number of additional or auxiliary irradiation pattern elements IPE' of the additional or auxiliary irradiation pattern may differ from the number of irradiation pattern elements IPE of the main irradiation pattern MP.

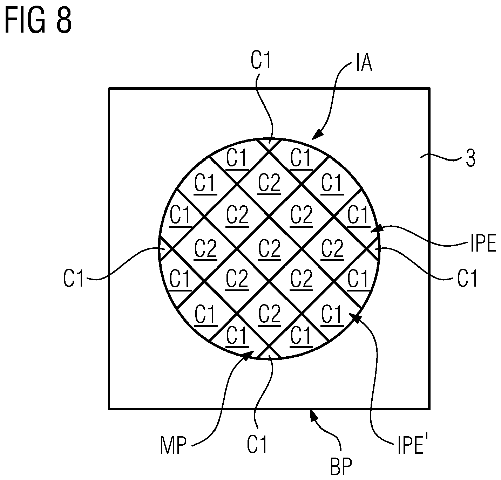

According to another exemplary embodiment of the method which is shown in Fig. 8, it is possible that the irradiation pattern elements IPE of an irradiation area IA are be categorized in at least two categories C1, C2, particularly categories relating to the specific structural properties of the object 2 which is to be additively manufactured. Thereby, only irradiation pattern elements IPE being categorized in a first category C1 are only irradiated in the main irradiation step and irradiation pattern elements IPE being categorized in a second category C2 are also irradiated in the at least one additional irradiation step. Hence, an efficient way of concertedly influencing and/or controlling the structural properties is given since only irradiation pattern elements of a category C1, C2 which effectively requires influencing and/or controlling the structural properties of the object 2 which is to be additively manufactured are in fact irradiated on basis of the main irradiation step and the at least one additional irradiation step. The categories C1, C2 may be implemented by a suitable hardware- and/or software-embodied categorization unit (not shown) - which may form part of the control unit - which takes into account diverse parameters of the object 2 which is to be additively manufactured. The categorization unit may particularly, determine specific portions and/or regions of the object 2 which require special structural properties, e.g. portions and/or regions under special, e.g. mechanical and/or thermal, loads, so that the irradiation pattern elements IPE which are arranged in respective portions and/or regions of the object 2 which require special structural properties may undergo an irradiation with the main irradiation step and the at least one additional irradiation step.

Single, a plurality, or all features mentioned in context with a specific embodiment may also apply to other embodiments. Hence, mentioned in context with a specific embodiment may be combined with at least one feature of another specific embodiment.

## Claims

1. Method for additively manufacturing at least one three-dimensional object (2) by means of successive layerwise selective irradiation and consolidation of build material layers (3), whereby each build material layer (3) comprises at least one irradiation area (IA) which is to be irradiated and consolidated by means of at least one energy beam (5), whereby the at least one irradiation area (IA) is irradiated on basis of a main irradiation pattern (MP) for consolidating the irradiation area (IA), the main irradiation pattern (MP) comprising a plurality of irradiation pattern elements (IPE) being separately irradiatable or irradiated with the at least one energy beam (5), **wherein**
for at least one irradiation area (IA) of at least one build material layer (3), at least one irradiation pattern element (IPE) is at least partially, particularly completely, irradiated in a main irradiation step and in at least one additional irradiation step, whereby the amount of energy input into the respective irradiation pattern element (IPE) in the main irradiation step is different from the amount of energy input into the irradiation pattern element (IPE) in the at least one additional irradiation step.

2. Method according to Claim 1, **wherein** the amount of energy input into the respective irradiation pattern element (IPE) in the at least one additional irradiation step is smaller than the amount of energy input into the respective irradiation pattern element (IPE) in the main irradiation step.

3. Method according to Claim 1 or 2, **wherein** a first irradiation parameter set is used for irradiating the irradiation pattern element (IPE) in the main irradiation step and at least one further irradiation parameter set is used for irradiating the irradiation pattern element (IPE) in the at least one additional irradiation step.

4. Method according to any of the preceding Claims, **wherein** the amount of energy input the amount of energy input into the respective irradiation pattern element (IPE) in the at least one additional irradiation step does not result in a consolidation of the build material (4), whereas the amount of energy input into the respective irradiation pattern element (IPE) in the main irradiation step does result in a consolidation of the build material (4).

5. Method according to any of the preceding Claims, **wherein** the amount of energy input into the respective irradiation pattern element (IPE) in the at least one additional irradiation step does result in a consolidation of the build material (4), whereby the build material (4) is consolidated with a first degree of consolidation, whereas the amount of energy input into the respective irradiation pattern element (IPE) in the main irradiation step does result in a consolidation of the build material (4), whereby the build material (4) is consolidated with a second degree of consolidation.

6. Method according to any of the preceding Claims, **wherein** for at least partially irradiating at least one irradiation pattern element (IPE) in the additional irradiation step, an area which is larger or smaller than the area of the respective irradiation pattern element (IPE) is irradiated.

7. Method according to any of the preceding Claims, **wherein** the additional irradiation step is performed on basis of an additional irradiation pattern comprising at least one additional irradiation pattern element (IPE'), particularly a plurality of additional irradiation pattern elements (IPE').

8. Method according to Claim 7, **wherein** the at least one additional irradiation pattern element (IPE') of the additional irradiation pattern has the same basic shape as an irradiation pattern element (IPE) of the main irradiation pattern or has a different basic shape as an irradiation pattern element (IPE) of the main irradiation pattern.

9. Method according to Claim 7 or 8, **wherein** the at least one additional irradiation pattern element (IPE) of the additional irradiation pattern has the same dimensions as an irradiation pattern element (IPE) of the main irradiation pattern or has different dimensions as an irradiation pattern element (IPE) of the main irradiation pattern.

10. Method according to any of Claims 7 - 9, **wherein** the at least one additional irradiation pattern element (IPE) of the additional irradiation pattern has the same orientation as an irradiation pattern element (IPE) of the main irradiation pattern or has a different orientation as an irradiation pattern element (IPE) of the main irradiation pattern.

11. Method according to any of the preceding Claims, **wherein** the additional irradiation step is a pre-heating step or a post-heating step.

12. Method according to any of the preceding Claims, **wherein** a respective irradiation pattern element (IPE) has the shape of a rectangle, particularly the shape of a square.

13. Method according to any of the preceding Claims, **wherein** the irradiation pattern elements (IPE) of the irradiation area of at least one build material layer (3) are categorized in at least two categories (C1, C2), particularly a category relating to the specific structural properties of the three-dimensional object (2), whereby only irradiation pattern elements (IPE) being categorized in a specific category (C1, C2) are irradiated in the main irradiation step and in the at least one additional irradiation step.

14. Control unit (7) for an apparatus (1) for additively manufacturing at least one three-dimensional object (2) by means of successive layerwise selective irradiation and consolidation of build material layers (3), whereby each build material layer (3) comprises at least one irradiation area (IA) which is to be irradiated and consolidated by means of at least one energy beam (5), whereby the at least one irradiation area (IA) is irradiated on basis of a main irradiation pattern (MP) for consolidating the irradiation area (IA), the main irradiation pattern (MP) comprising a plurality of irradiation pattern elements (IPE) being separately irradiatable or irradiated with the at least one energy beam (5), whereby
the control unit (7) is configured to control the successive layerwise selective irradiation and consolidation of respective irradiation areas (IA) in accordance with the method according to any of the preceding Claims.

15. Apparatus (1) for additively manufacturing at least one three-dimensional object (2) by means of successive layerwise selective irradiation and consolidation of build material layers (3), whereby each build material layer (3) comprises at least one irradiation area (IA) which is to be irradiated and consolidated by means of at least one energy beam (5), whereby the at least one irradiation area (IA) is irradiated on basis of a main irradiation pattern (MP) for consolidating the irradiation area (IA), whereby the main irradiation pattern (MP) comprises a plurality of irradiation pattern elements (IPE) being separately irradiatable or irradiated with the at least one energy beam (5), the apparatus (1) comprising a control unit (7) according to Claim 14.
